# EUROPEAN PATENT SPECIFICATION

(11) **EP 3 399 581 B1**
(45) Date of publication and mention of the grant of the patent: **16.02.2022**
(21) Application number: 17875608.6
(22) Date of filing: 29.11.2017
(51) Int. Cl.: H01M 10/04, H01M 10/058, B08B 1/04, B08B 1/02

(54) **CLEANING DEVICE, PROVIDED WITH CLEANING ROLL, FOR PROTECTIVE FILM FOR BATTERY CELL PRODUCTION**
REINIGUNGSVORRICHTUNG, MIT EINER REINIGUNGSROLLE, FÜR SCHUTZFILM ZUR BATTERIEZELLENHERSTELLUNG
DISPOSITIF DE NETTOYAGE, POURVU D'UN ROULEAU DE NETTOYAGE, DE FILM PROTECTEUR SERVANT À LA FABRICATION D'ÉLÉMENTS DE BATTERIE

(30) Priority: 30.11.2016 KR 20160161266; 28.11.2017 KR 20170160256
(43) Date of publication of application: 07.11.2018
(73) Proprietor: LG Energy Solution Ltd., 07335 Seoul (KR)
(72) Inventor: PARK, Sang Youn, Daejeon 34122 (KR); KONG, Jin Hak, Daejeon 34122 (KR); CHOI, Kyu Hyun, Daejeon 34122 (KR)
(74) Representative: Plasseraud IP
(86) International application number: PCT/KR2017/013771
(87) International publication number: WO 2018/101725

(56) References cited:
- EP-A1- 2 050 515
- WO-A1-2005/009633
- WO-A1-2009/116568
- JP-A- H0 847 674
- JP-A- 2001 321 732
- JP-A- 2013 003 436
- KR-A- 20160 072 421
- KR-B1- 101 355 834
- US-A1- 2003 066 543
- US-A1- 2010 328 676
- US-A1- 2014 165 314

## Description

### Technical Field

The present disclosure relates to a device including a cleaning roll, and for cleaning a protective film for preparing a battery cell.

### Background Art

Rechargeable secondary batteries are attracting attention as a power source for devices which require high output and large capacity such as electric vehicles (EVs), hybrid EVs (HEVs), plug-in HEVs, and the like, which have been proposed as a solution to the problem of air pollution generated by conventional gasoline vehicles and diesel vehicles using fossil fuel.

As described above, as the devices in which a secondary battery is applied are being diversified, lithium secondary batteries have been diversified to provide the output and capacity suitable for the devices, and there is additionally a strong demand for the miniaturization of lithium secondary batteries.

A lithium secondary battery includes a battery case, and an electrode assembly and an electrolytic solution incorporated in the battery case. Lithium secondary batteries are classified into cylindrical batteries, prismatic batteries, and pouch-type batteries according to an outer shape of the battery case.

The electrode assembly includes a positive electrode, a negative electrode, and a separator interposed between the positive electrode and the negative electrode, and a plurality of positive electrodes and negative electrodes are alternately stacked.

In particular, the electrode assembly in which a plurality of positive electrodes, negative electrodes, and separators are stacked is subjected to a lamination process of bonding the positive electrodes, the negative electrodes, and the separators by heating and pressing.

While heating and pressing the electrode assembly, in order to prevent the outer surface of the electrode assembly from being damaged by a pressing plate, heating and pressing are performed in a state in which a protective film is attached to a portion where the electrode assembly faces the pressing plate.

In particular, since the protective film is only intended to protect the outer surface of the electrode assembly during the heating and pressing processes, a production cost can be reduced by reusing the film after the lamination process.

However, a protective film which has already been used for the lamination process may inevitably be contaminated with microscopic foreign substances during the heating and pressing processes.

When the protective film contaminated by the foreign substances is attached to the outer surface of the electrode assembly again and the lamination process is performed, the electrode assembly may become contaminated with foreign substances.

If the electrode assembly is contaminated by foreign substances, a fatal problem which leads to reduced battery capacity may occur.

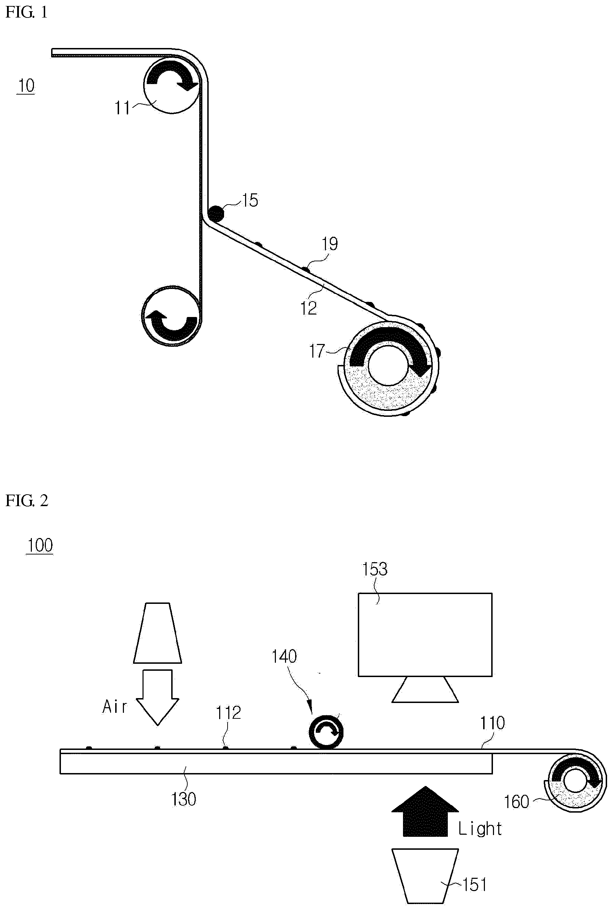

FIG. 1 is a schematic view briefly showing a winding device for a protective film used in a conventional lamination process.

Referring to FIG. 1, a protective film winding device 10 includes a feed roll 11, a guide roll 15 and a winding roll 17.

More specifically, as the feed roll 11 rotates, a protective film 12 is moved in one direction, and the protective film 12 is wound around the winding roll 17 by the rotation of the winding roll 17 corresponding to the rotation of the feed roll 11.

In particular, there is a problem in that, since the protective film 12 wound around the winding roll 17 becomes contaminated by foreign substances 19 during the lamination process, the protective film 12 is wound around the winding roll 17 in a foreign substance contaminated state.

Therefore, there is a high need for a technique for preventing the electrode assembly from being contaminated in which the protective film used in the lamination process is rewound in a clean state in which all foreign substances have been removed, even if the protective film is reused after being used once.

The document US-A1-2003/0066543 discloses a device suitable for cleaning a protective film comprising a cleaning roll located between a feed roll and a winding roll, the cleaning roll being configured to remove foreign substances remaining on the protective film.

### Disclosure

### Technical Problem

The present disclosure is provided to solve the above-described problems of the related art and technical problems which have been identified in the past, and provides thereto a device in accordance with claim 1.

The inventors of the present application have conducted intense research and various experiments and have confirmed that when a cleaning device for a protective film is formed with a specific structure, foreign substances remaining on the protective film can be adsorbed and removed, and ultimately it is possible to prevent deterioration of battery capacity and a battery cell defect beforehand, thereby attaining the present disclosure.

### Technical Solution

The present disclosure provides a device for cleaning a protective film to be attached to an outer surface of a laminate during a lamination process of heating and pressing the laminate of electrodes and a separator to produce an electrode assembly for a battery cell, including: a feed roll configured to supply the protective film; at least one guide roll configured to guide a progress of the protective film supplied from the feed roll; a cleaning roll located between the feed roll and a winding roll and configured to remove foreign substances remaining on the protective film supplied from the feed roll; and the winding roll configured to wind the protective film from which foreign substances have been removed by the cleaning roll, wherein a nano thin film is formed on an outer surface of the cleaning roll to adsorb and remove the foreign substances remaining on the protective film.

In particular, the feed roll, the guide roll, the winding roll, and the cleaning roll may be positioned such that their rotation axes are parallel to each other.

Accordingly, the feed roll, the guide roll, the winding roll, and the cleaning roll may rotate in the same direction and with the same circumferential velocity.

In particular, as the winding roll rotates, the protective film supplied from the feed roll may be moved to the winding roll through the cleaning roll.

In other words, the feed roll configured to supply the protective film and the winding roll configured to wind the protective film may not be separately rotated by separate power sources, but may be formed so that the power source is connected only to a rotation axis of the winding roll.

Accordingly, as the winding roll rotates to wind the protective film, the protective film may be transported while the feed roll configured to supply the protective film is rotated.

As described above, by connecting the power source only to the rotation axis of the winding roll, the protective film supplied from the feed roll may be transported in a taut state having a predetermined tensile force, thereby increasing a foreign substance cleaning efficiency of the cleaning roll.

In accordance with the invention, a sensor positioned between the cleaning roll and the winding roll with respect to a movement direction of the protective film and configured to check whether or not the foreign substances on the protective film have been removed is included.

In particular, the sensor may include a light source part configured to irradiate, onto the protective film, light transmitted through the protective film; and a monitor part configured to sense the light transmitted through the protective film. The light source part and the monitor part may be positioned in a straight line with the protective film interposed therebetween and the sensor may be configured to visually check through the monitor part whether or not the foreign substances on the protective film have been removed.

As described above, when the sensor is used for confirming the removal of foreign substances, the protective film may be formed of a light-transmitting material.

Also, an intensity of the light emitted from the light source part may be adjusted depending on the material of the protective film.

The monitor part may be configured to sense the light transmitted through the protective film, so that an operator may visually check through the monitor part whether or not the foreign substances on the protective film have been removed.

Specifically, the light irradiated from the light source part cannot pass through the foreign substances. Therefore, when the foreign substances have not been removed by the cleaning roll, the foreign substances may be seen as a shadow or a dot in the monitor part.

Further, when a large number of foreign substances have not been removed, the brightness of the protective film viewed from the monitor part may be significantly reduced. Thus, when the brightness of the protective film is lower than a predetermined brightness or when many shadows or dots are seen, an operator may stop the movement of the protective film.

In addition, the sensor may further include a light intensity sensing part configured to measure a light intensity of the light transmitted through the protective film; and operations of the winding roll and the feel roll may be stopped when the light intensity measured by the light intensity sensing part is less than a predetermined value.

As described above, in addition to what the operator sees on the monitor part, the sensor may include the light intensity sensing part which, by using the property of the light emitted from the light source part of not passing through the foreign substances, automatically measures the light intensity of the light transmitted through the protective film.

In particular, a reference value of the light intensity for adjustment of the operations of the winding roll and the feed roll by the light intensity sensing part may be adjusted according to the operator's choice.

When the light intensity measured by the light intensity sensing part is less than a predetermined value, the operations of the winding roll and the feed roll stop, which means that there is a foreign substance not yet removed on the protective film, and therefore the foreign substance needs to be removed.

In one specific example, the cleaning roll may be formed to be movable in a movement direction of the protective film and an opposite direction thereof, and when it is confirmed by the sensor that foreign substances have not been removed, the cleaning roll may move in the movement direction of the protective film and the opposite direction thereof, and the foreign substances on the protective film may be removed.

Only the cleaning roll may rotate and move in the movement direction of the protective film to remove the foreign substances which are not removed by the cleaning roll in a state in which the operations of the winding roll and the feed roll are stopped, that is, in a state in which the movement of the protective film is stopped.

As described above, as the cleaning roll rotates and moves, the remaining foreign substances on the protective film may be removed, and the cleaning roll may be moved back into place by being moved back and forth.

In particular, a nano thin film formed on an outer surface of the cleaning roll may be formed such that particles having a particle size of 0.5µm or less are adsorbed.

In order to remove foreign substances having a particle size of 2µm or more, an air compressor may be further included to spray air on both sides of the protective film and remove large particles of the foreign substances.

In particular, the movement direction of the protective film may be changed to be vertical by the guide roll, and by changing the movement direction of the protective film, the large particles of the foreign substances may be naturally removed when the movement direction of the protective film is changed,.

Also, according to the manufacturer's choice, the guide roll may be a plurality of guide rolls, and sections in which the movement direction of the protective film is an upward vertical direction or a downward vertical direction may be formed.

In another specific example, power sources may be respectively connected to the feed roll configured to supply the protective film and the winding roll configured to wind the protective film.

Specifically, the power source connected to the feed roll may be formed to rotate the feed roll in a direction opposite to a rotating direction of the winding roll, and when the feed roll is reversed, the protective film may be transported to the feed roll again.

In particular, when the sensor confirms that the foreign substances have not been removed, the protective film may be moved to the winding roll as the winding roll rotates, and then the protective film wound on the winding roll may be unwound and moved to the feed roll as the feed roll rotates in a reverse direction.

Thus, by connecting the power sources to the winding roll and feed roll, respectively, the protective film may be moved in both directions so that a portion where the foreign substances on the protective film have not been removed may be repeatedly passed through the cleaning roll.

In still another specific example, the cleaning roll may include a first cleaning roll and a second cleaning roll; nano thin films of the first cleaning roll and the second cleaning roll may be formed to adsorb foreign particles having different sizes, and the first cleaning roll may be formed to adsorb larger foreign particles than the second cleaning roll; and the first cleaning roll and the second cleaning roll may be arranged in sequence on the basis of a movement direction of the protective film moving from the feed roll to the winding roll.

In particular, the nano thin film formed on the first cleaning roll may be formed so that particles having a size of 1µm to 2µm are adsorbed, and the nano thin film formed on the second cleaning roll may be formed so that particles having a size of less than 0.5µm are adsorbed.

As described above, by providing a plurality of cleaning rolls and varying the size of the foreign particles adsorbed by each of the cleaning rolls, it is possible to increase an efficiency of removing foreign substances remaining on the protective film, and the number of the cleaning rolls and the size of the adsorbed foreign particles may be changed according to the manufacturer's choice.

The cleaning roll may include a pair of rolls, and the rolls may be formed in a straight line in a vertical direction with the protective film interposed therebetween. The foreign substances remaining on both sides of the protective film may be removed while the protective film passes between the pair of rolls. Thus, by cleaning both sides of the protective film, ultimately, productivity of an electrode assembly may be increased.

### Advantageous Effects

As described above, a device for cleaning a protective film and according to the present disclosure includes a cleaning roll having a nano thin film on its outer surface, thereby effectively removing foreign substances on the protective film contaminated in a lamination process. Accordingly, the protective film can be reused and a production cost can be reduced.

Further, in addition to the cleaning roll, by providing a sensor configured to check foreign substances remaining on the protective film, it is possible to check with the sensor whether or not the foreign substances have been removed by the cleaning roll, and ultimately, a decrease in productivity and a battery cell defect can be prevented in advance.

### Brief Description of the Drawings

FIG. 1 is a schematic view briefly showing a winding device for a protective film used in a conventional lamination process.
FIG. 2 is a schematic view briefly showing a process of cleaning a protective film using a protective film cleaning device according to an exemplary embodiment of the present disclosure.
FIG. 3 is a schematic view briefly showing a process of cleaning a protective film using a protective film cleaning device according to another exemplary embodiment of the present disclosure.
FIG. 4 is a schematic view briefly showing a process of stopping a movement of a protective film in its state in FIG. 3 and then removing foreign substances on the protective film as a cleaning roll moves.
FIG. 5 is a schematic view briefly showing a process of cleaning a protective film using a protective film cleaning device according to another exemplary embodiment of the present disclosure.
FIG. 6 is a schematic view briefly showing a process of cleaning a protective film using a protective film cleaning device according to another exemplary embodiment of the present disclosure.

### Detailed Description of the Preferred Embodiments

Hereinafter, embodiments of the present disclosure will be described with reference to the accompanying drawings. However, the description provided herein is for better understanding of the present disclosure. The of the present disclosure is delimited by the appended claims.

FIG. 2 is a schematic view briefly showing a process of cleaning a protective film using a protective film cleaning device according to an exemplary embodiment of the present disclosure.

Referring to FIG. 2, a cleaning device for a protective film 100 may include an air compressor, a feed roll (not shown), a cleaning roll 140, a winding roll 160, a support frame 130, and sensors 151 and 153.

The air compressor may strongly jet air to the protective film 110 according to the rotation of the winding roll 160 when the protective film 110 moves so that foreign substances 112 remaining on the protective film 110 may be primarily removed.

In particular, the protective film 110 may be formed to move on the support frame 130, and the cleaning roll 140 may be rotatably fixed to an upper part of the support frame 130.

The sensors 151 and 153 are positioned between the cleaning roll 140 and the winding roll 160, and the sensor may include a light source part 151 and a monitor part 153.

In particular, the light source part 151 of the sensor may irradiate, toward the protective film 110, light transmitted through the protective film 110, and the monitor part 153 may sense the light transmitted through the protective film 110.

In addition, in order to sense the light transmitted through the protective film 110, the monitor part 153 may be positioned in a straight line in a direction facing the light source part 151 with the protective film 110 interposed therebetween.

In particular, the monitor part 153 may be formed such that an operator can visually check the light transmitted through the protective film 110, and an operation of the winding roll 160 may be controlled by the operator.

Accordingly, when the operator confirms through the monitor part 153 that the foreign substances on the protective film 110 have not been removed by the cleaning roll 140, the operator may stop the rotation of the winding roll 160 to remove the foreign substances on the protective film 110.

The sensor may further include a light intensity sensing part (not shown) configured to measure light intensity of the light transmitted through the protective film 110.

Specifically, the light intensity sensing part may sense the light intensity using a principle of light intensity decreasing when a large amount of particles of the foreign substances 112 remain on the protective film 110, and transmittance of the light emitted from the light source part 151 through the protective film 151 is reduced.

In particular, when the light intensity is lower than a predetermined value, the rotation of the winding roll 160 may be automatically stopped by the light intensity sensing part which measures the light intensity of the light transmitted through the protective film 110, so that the efficiency of a cleaning process of the protective film 110 may be increased.

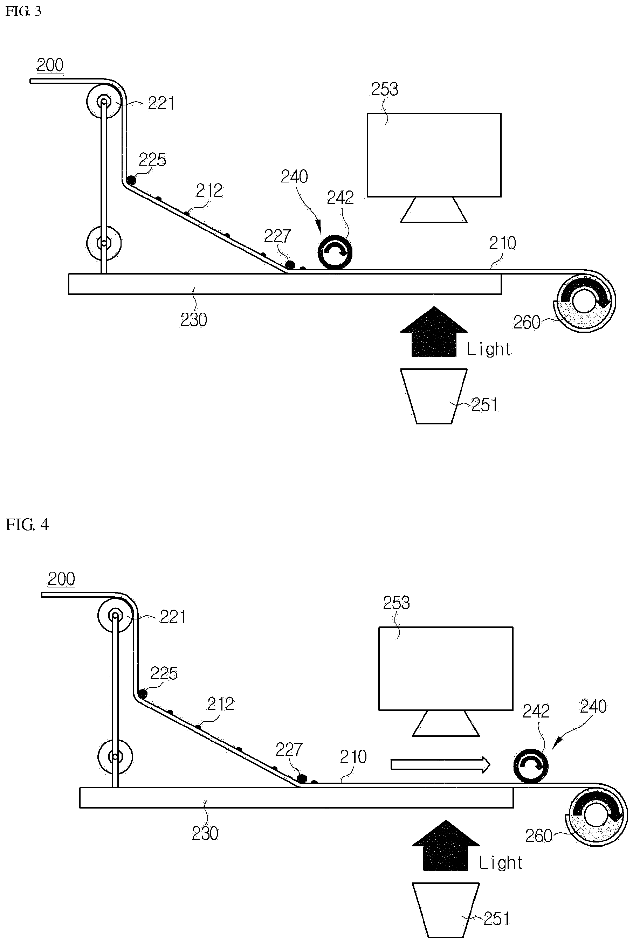

FIG. 3 is a schematic view briefly showing a process of cleaning a protective film using a protective film cleaning device according to another exemplary embodiment of the present disclosure.

Referring to FIG. 3, a cleaning device for a protective film 200 includes a feed roll 221, guide rolls 225 and 227, a cleaning roll 240 having a nano thin film 242 formed on an outer surface thereof, a winding roll 260, a support frame 230, and sensors 251 and 253.

The feed roll 221 of FIG. 3 may have a type which supplies the protective film 210 from one side without the protective film 210 being wound, but is not limited thereto, and the protective film 210 may be wound around the feed roll 221.

A lower side of the feed roll 221 may be connected to the guide rolls 225 and 227 in order to change a movement direction of the protective film 210 to be vertical.

As the guide rolls 225 and 227 are formed as described above, the movement direction of the protective film 210 may be changed. While being changed the movement direction of the protective film 210, large particles of the foreign substances may be unforcedly removed.

In order to move the protective film 210 along an upper surface of the support frame 230, the movement direction of the protective film 210 must be changed again toward the support frame 230, and the guide roll 227 may thus be formed.

FIG. 4 is a schematic view briefly showing a process of stopping a movement of a protective film in the state in FIG. 3 and then removing foreign substances on the protective film as a cleaning roll moves.

Referring to FIGS. 3 and 4, when the operator confirms that the foreign substances on the protective film 210 have not been removed by the cleaning roll 240 through the monitor part 253 and stops the rotation of the winding roll 260, the foreign substances remaining on the protective film 210 may be removed by being adsorbed by the nano thin film 242 of the cleaning roll 240.

In particular, the feed roll 221 or the winding roll 260 may not rotate in a direction opposite to a direction in which the protective film 210 is wound by the winding roll 260, which is an original movement direction of the protective film 210. The rotation of the feed roll 221 and the winding roll 260 may be stopped and only the cleaning roll 240 may be reciprocally rotated so that the foreign substances remaining on the protective film 210 may be adsorbed.

FIG. 3 shows the cleaning roll 240 in its regular position, and FIG. 4 shows the cleaning roll 240 rotating and moving along the upper surface of the protective film 210, and the cleaning roll 240 moves again to the regular position shown in FIG. 3.

The number of times the cleaning roll 240 reciprocally rotates and moves is freely controllable in accordance with the operator's choice or a removal state of the foreign substances.

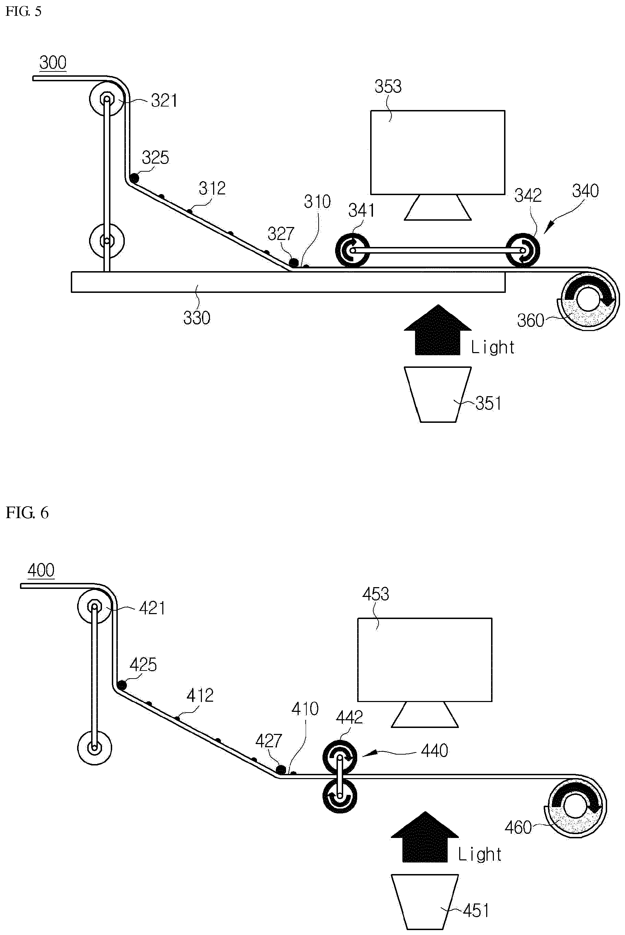

FIG. 5 is a schematic view briefly showing a process of cleaning a protective film using a protective film cleaning device according to another exemplary embodiment of the present disclosure.

Referring to FIG. 5, a cleaning device for a protective film 300 may be constructed in the same manner as in the above-described embodiments, with exception for the cleaning roll 340.

A plurality of cleaning rolls 340 may be fixed to a support frame 330, and while rotating in a fixed state, foreign substances may be adsorbed by nano thin films on outer surfaces of cleaning rolls 341 and 342.

In particular, different nano thin films are formed on the cleaning rolls 341 and 342 so that foreign substances having different sizes are adsorbed.

Specifically, a first cleaning roll 341 and a second cleaning roll 342 are disposed in sequence with respect to the movement direction of of the protective film 310 moving from a feed roll 321 to a winding roll 360.

In particular, a size of the foreign substances adsorbed on the nano thin film of the first cleaning roll 341 may be larger than a size of the foreign substances adsorbed on the nano thin film of the second cleaning roll 342.

As described above, by providing the first cleaning roll 341 and the second cleaning roll 342 having nano thin films for adsorbing foreign particles of different sizes, coarse and large particles are first adsorbed by the first cleaning roll 341 and smaller particles are adsorbed by the second cleaning roll 342, thereby increasing cleaning efficiency.

FIG. 6 is a schematic view briefly showing a process of cleaning a protective film using a protective film cleaning device according to another exemplary embodiment of the present disclosure.

Referring to FIG. 6, cleaning rolls 440 may be formed in a straight line in a vertical direction with a protective film 410 interposed therebetween. When the protective film 410 passes between the pair of rolls 440, foreign substances remaining on both surfaces of the protective film 410 may be removed.

Since the foreign substances remaining on both surfaces of the protective film 410 are removed using the pair of cleaning rolls 440, time required for the cleaning process of the protective film 410 may be shortened.

It should be understood by those skilled in the art that various changes may be made without departing from the scope of the present disclosure as delimited by the appended claims.

## Claims

1. A device (200; 300; 400) for cleaning a protective film (210; 310; 410) to be attached to an outer surface of a laminate of electrodes during a lamination process of heating and pressing the laminate of electrodes and a separator to produce an electrode assembly for a battery cell, comprising:
a feed roll (221; 321; 421) configured to supply the protective film (210; 310; 410);
at least one guide roll (225, 227; 325, 327; 425, 427) configured to guide a progress of the protective film (210; 310; 410) supplied from the feed roll (221; 321; 421);
a cleaning roll (240; 340; 440) located between the feed roll (221; 321; 421) and a winding roll (260; 360; 460) and configured to remove foreign substances remaining on the protective film (210; 310; 410) supplied from the feed roll (221; 321; 421); and
the winding roll (260; 360; 460) configured to wind the protective film (210; 310; 410) from which foreign substances have been removed by the cleaning roll (240; 340; 440), **characterized in that** the device is provided with means for forming a nano thin film on an outer surface of the cleaning roll (240; 340; 440) to adsorb and remove the foreign substances remaining on the protective film (210; 310; 410) and **in that** the device comprises a sensor (251, 253; 351, 353; 451, 453) positioned between the cleaning roll (140; 240; 340; 440) and the winding roll (260; 360; 460) with respect to a movement direction of the protective film (210; 310; 410) said sensor being configured to check whether or not the foreign substances on the protective film (210; 310; 410) have been removed.

2. The device (200; 300; 400) of claim 1, wherein the feed roll (221; 321; 421), the guide roll (225, 227; 325, 327; 425, 427), the winding roll (260; 360; 460), and the cleaning roll (240; 340; 440) are positioned such that their rotation axes are parallel to each other.

3. The device (200; 300; 400) of claim 1, configured such that, as the winding roll (260; 360; 460) rotates, the protective film (210; 310; 410) supplied from the feed roll (221; 321; 421) is moved to the winding roll (260; 360; 460) through the cleaning roll (240; 340; 440).

4. The device (200; 300; 400) of claim 1, wherein the sensor comprises
a light source part (251; 351; 451) configured to irradiate, onto the protective film (210; 310; 410), light transmitted through the protective film (210; 310; 410); and
a monitor part (253; 353; 453) configured to sense the light transmitted through the protective film (210; 310; 410),
wherein the light source part (251; 351; 451) and the monitor part (253; 353; 453) are positioned in a straight line with the protective film (210; 310; 410) interposed therebetween and the sensor is configured to visually check through the monitor part (253; 353; 453) whether or not the foreign substances on the protective film (210; 310; 410) have been removed.

5. The device (200; 300; 400) of claim 4,
wherein the sensor further includes a light intensity sensing part configured to measure a light intensity of the light transmitted through the protective film (210; 310; 410), and
the device is configured such that operations of the winding roll (260; 360; 460) and the feed roll are stopped when the light intensity measured by the light intensity sensing part is less than a predetermined value.

6. The device (200; 300; 400) of claim 1, configured such that, when the sensor confirms that the foreign substances have not been removed, the protective film (210; 310; 410) is moved to the winding roll (260; 360; 460) as the winding roll (260; 360; 460) rotates, and then the protective film (210; 310; 410) wound on the winding roll (260; 360; 460) is unwound and moved to the feed roll (221; 321; 421) as the feed roll (221; 321; 421) rotates in a reverse direction.

7. The device (200; 300; 400) of claim 1, configured such that the nano thin film is formed such that particles having a particle size of 1µm or less are adsorbed.

8. The device (200; 300; 400) of claim 1, wherein the cleaning roll (340) includes a first cleaning roll (341) and a second cleaning roll (342);
the device being configured such that nano thin films of the first cleaning roll (341) and the second cleaning roll (342) are formed to adsorb foreign particles having different sizes, and the first cleaning roll (341) is formed to adsorb larger foreign particles than the second cleaning roll (342); and
the first cleaning roll (341) and the second cleaning roll (342) are arranged in sequence on the basis of a movement direction of the protective film (210; 310; 410) moving from the feed roll (221; 321; 421) to the winding roll (260; 360; 460).

9. The device (200; 300; 400) of claim 8, configured such that the nano thin film formed on the first cleaning roll (341) is formed so that particles having a size of 1µm to 2µm are adsorbed, and the nano thin film formed on the second cleaning roll (342) is formed so that particles having a size of less than 0.5µm are adsorbed.

10. The device (200; 300; 400) of claim 1, wherein the cleaning roll (440) includes a pair of rolls, and the rolls are formed in a straight line in a vertical direction with the protective film (410) interposed therebetween, such that the foreign substances remaining on both sides of the protective film (410) are removed while the protective film (410) passes between the pair of rolls.

## Patentansprüche

1. Vorrichtung (200; 300; 400) zum Reinigen eines Schutzfilms (210; 310; 410), anzubringen an einer Außenfläche eines Laminats von Elektroden, während eines Laminierungsprozesses des Erwärmens und Pressens des Laminats von Elektroden und einem Separator, um eine Elektrodenanordnung für eine Batteriezelle herzustellen, umfassend:
eine Zuführrolle (221; 321; 421), dazu eingerichtet, den Schutzfilm (210; 310; 410) zu liefern;
mindestens eine Führungsrolle (225, 227; 325; 327; 425; 427), dazu eingerichtet, einen Vorschub des von der Zuführrolle (221; 321; 421) gelieferten Schutzfilms (210; 310; 410) zu steuern;
eine Reinigungsrolle (240; 340; 440), die sich zwischen der Zuführrolle (221; 321; 421) und einer Wickelrolle (260; 360; 460) befindet und dazu eingerichtet ist, auf dem von der Zuführrolle (221; 321; 421) gelieferten Schutzfilm (210; 310; 410) verbleibende Fremdstoffe zu entfernen; und
die Wickelrolle (260; 360; 460), dazu eingerichtet den Schutzfilm (210; 310; 410), von dem Fremdstoffe durch die Reinigungsrolle (240; 340; 440) entfernt wurden, aufzuwickeln
**dadurch gekennzeichnet, dass** die Vorrichtung mit Mitteln zum Bilden eines Nano-Dünnfilms an einer äußeren Oberfläche der Reinigungsrolle (240; 340; 440) bereitgestellt ist, um Fremdstoffe, welche auf dem Schutzfilm (210; 310; 410) verbleiben, zu adsorbieren und zu entfernen
und dadurch, dass die Vorrichtung einen Sensor (251; 253; 351; 353; 451; 453) umfasst, welcher zwischen der Reinigungsrolle (140; 240; 340; 440) und der Wickelrolle (260; 360; 460) in Bezug auf eine Bewegungsrichtung des Schutzfilms (210; 310; 410) positioniert ist, wobei der Sensor dazu eingerichtet ist, zu überprüfen, ob die Fremdstoffe auf dem Schutzfilm (210; 310; 410) entfernt wurden oder nicht.

2. Vorrichtung (200; 300; 400) nach Anspruch 1, wobei die Zuführrolle (221; 321; 421), die Führungsrolle (225, 227; 325; 327; 425; 427), die Wickelrolle (260; 360; 460) und die Reinigungsrolle (240; 340; 440) so positioniert sind, dass ihre Drehachsen parallel zueinander sind.

3. Vorrichtung (200; 300; 400) nach Anspruch 1, dazu eingerichtet, dass beim Drehen der Wickelrolle (260; 360; 460) der von der Zuführrolle (221; 321; 421) gelieferte Schutzfilm (210; 310; 410) durch die Reinigungsrolle (240; 340; 440) zu der Wickelrolle (260; 360; 460) bewegt wird.

4. Vorrichtung (200; 300; 400) nach Anspruch 1, wobei der Sensor umfasst:
einen Lichtquellenteil (251; 351; 451), der dazu eingerichtet ist, auf den Schutzfilm (210; 310; 410) Licht zu strahlen, das durch den Schutzfilm (210; 310; 410) transmittiert wird; und
einen Monitorteil (253; 353; 453), der dazu eingerichtet ist, das durch den Schutzfilm (210; 310; 410) transmittierte Licht zu erfassen,
wobei der Lichtquellenteil (251; 351; 451) und der Monitorteil (253; 353; 453) in einer geraden Linie mit dem dazwischen angeordneten Schutzfilm (210; 310; 410) positioniert sind und der Sensor dazu eingerichtet ist, visuell durch den Monitorteil (253; 353; 453) zu prüfen, ob die Fremdstoffe auf dem Schutzfilm (210; 310; 410) entfernt wurden oder nicht.

5. Vorrichtung (200; 300; 400) nach Anspruch 4,
wobei der Sensor ferner einen Lichtintensitätserfassungsteil umfasst, der dazu eingerichtet ist, eine Lichtintensität des durch den Schutzfilm (210; 310; 410) transmittierten Lichts zu messen, und
die Vorrichtung dazu eingerichtet ist, dass ein Betrieb der Wickelrolle (260; 360; 460) und der Zuführrolle gestoppt wird, wenn die durch das Lichtintensitätserfassungsteil gemessene Lichtintensität geringer als ein vorbestimmter Wert ist.

6. Vorrichtung (200; 300; 400) nach Anspruch 1, dazu eingerichtet, dass, wenn der Sensor bestätigt, dass die Fremdstoffe nicht entfernt wurden, die Schutzfolie (210; 310; 410) zu der Wickelrolle (260; 360; 460) bewegt wird, während sich die Wickelrolle (260; 360; 460) dreht, und dann der auf der Wickelrolle (260; 360; 460) aufgewickelte Schutzfilm (210; 310; 410) abgewickelt und zur Zuführrolle (221; 321; 421) bewegt wird, wenn sich die Zuführrolle (221; 321; 421) in umgekehrter Richtung dreht.

7. Vorrichtung (200; 300; 400) nach Anspruch 1, dazu eingerichtet, dass der Nano-Dünnfilm so gebildet ist, dass Partikel mit einer Partikelgröße von 1 µm oder weniger adsorbiert werden.

8. Vorrichtung (200; 300; 400) nach Anspruch 1, wobei die Reinigungsrolle (340) eine erste Reinigungsrolle (341) und eine zweite Reinigungsrolle (342) einschließt;
wobei die Vorrichtung dazu eingerichtet ist, dass Nano-Dünnfilme der ersten Reinigungsrolle (341) und der zweiten Reinigungsrolle (342) gebildet sind, um Fremdpartikel unterschiedlicher Größe zu adsorbieren, und die erste Reinigungsrolle (341) gebildet ist, um größere Fremdpartikel als die zweite Reinigungsrolle (342) zu adsorbieren; und
die erste Reinigungsrolle (341) und die zweite Reinigungsrolle (342) nacheinander angeordnet sind, basierend auf einer Bewegungsrichtung des sich von der Zuführrolle (221; 321; 421) zu der Wickelrolle (260; 360; 460) bewegenden Schutzfilms (210; 310; 410).

9. Vorrichtung (200; 300; 400) nach Anspruch 8, dazu eingerichtet, dass der auf der ersten Reinigungsrolle (341) gebildete Nano-Dünnfilm so gebildet ist, dass Partikel mit einer Größe von 1 µm bis 2 µm adsorbiert werden, und der auf der zweiten Reinigungsrolle (342) gebildete Nano-Dünnfilm so gebildet ist, dass Partikel mit einer Größe von weniger als 0,5 µm adsorbiert werden.

10. Vorrichtung (200; 300; 400) nach Anspruch 1, wobei die Reinigungsrolle (440) ein Rollenpaar einschließt und die Rollen in einer vertikalen Richtung mit dem dazwischen angeordneten Schutzfilm (410) in einer geraden Linie ausgebildet sind, sodass die auf beiden Seiten des Schutzfilms (410) verbleibenden Fremdstoffe entfernt werden, während der Schutzfilm (410) das Rollenpaar passiert.

## Revendications

1. Dispositif (200 ; 300 ; 400) pour nettoyer un film protecteur (210 ; 310 ; 410) à fixer à une surface extérieure d'un stratifié d'électrodes pendant un processus de stratification consistant à chauffer et à presser le stratifié d'électrodes et un séparateur pour produire un ensemble d'électrodes pour un élément de batterie, comprenant :
un rouleau d'alimentation (221 ; 321 ; 421) configuré pour fournir le film protecteur (210; 310; 410);
au moins un rouleau de guidage (225, 227 ; 325, 327 ; 425, 427) configuré pour guider une progression du film protecteur (210; 310; 410) fourni par le rouleau d'alimentation (221 ; 321 ; 421) ;
un rouleau de nettoyage (240 ; 340 ; 440) situé entre le rouleau d'alimentation (221 ; 321 ; 421) et un rouleau d'enroulement (260 ; 360 ; 460) et configuré pour éliminer des substances étrangères restant sur le film protecteur (210 ; 310 ; 410) fourni par le rouleau d'alimentation (221 ; 321 ; 421) ; et
le rouleau d'enroulement (260 ; 360 ; 460) étant configuré pour enrouler le film protecteur (210 ; 310 ; 410) duquel des substances étrangères ont été éliminées par le rouleau de nettoyage (240 ; 340 ; 440),
**caractérisé en ce que** le dispositif est muni de moyens pour former un nano film mince sur une surface extérieure du rouleau de nettoyage (240 ; 340 ; 440) pour adsorber et éliminer les substances étrangères restant sur le film protecteur (210 ; 310 ; 410) et **en ce que** le dispositif comprend un capteur (251, 253 ; 351, 353 ; 451, 453) positionné entre le rouleau de nettoyage (140 ; 240 ; 340 ; 440) et le rouleau d'enroulement (260 ; 360 ; 460) par rapport à une direction de déplacement du film protecteur (210 ; 310 ; 410), ledit capteur étant configuré pour vérifier si les substances étrangères sur le film protecteur (210 ; 310 ; 410) ont été éliminées ou non.

2. Dispositif (200 ; 300 ; 400) selon la revendication 1, dans lequel le rouleau d'alimentation (221 ; 321 ; 421), le rouleau de guidage (225, 227 ; 325, 327 ; 425, 427), le rouleau d'enroulement (260 ; 360 ; 460), et le rouleau de nettoyage (240 ; 340 ; 440) sont positionnés de telle sorte que leurs axes de rotation sont parallèles les uns aux autres.

3. Dispositif (200 ; 300 ; 400) selon la revendication 1, configuré de telle sorte que, lorsque le rouleau d'enroulement (260 ; 360 ; 460) tourne, le film protecteur (210 ; 310 ; 410) fourni par le rouleau d'alimentation (221 ; 321 ; 421) est déplacé vers le rouleau d'enroulement (260 ; 360 ; 460) à travers le rouleau de nettoyage (240 ; 340 ; 440).

4. Dispositif (200 ; 300 ; 400) selon la revendication 1, dans lequel le capteur comprend
une partie de source lumineuse (251 ; 351 ; 451) configurée pour irradier, sur le film protecteur (210 ; 310 ; 410), une lumière transmise à travers le film protecteur (210 ; 310; 410); et
une partie de surveillance (253 ; 353 ; 453) configurée pour détecter la lumière transmise à travers le film protecteur (210 ; 310 ; 410),
dans lequel la partie de source lumineuse (251 ; 351 ; 451) et la partie de surveillance (253 ; 353 ; 453) sont positionnées en ligne droite avec le film protecteur (210 ; 310 ; 410) interposé entre elles et le capteur est configuré pour vérifier visuellement à travers la partie de surveillance (253 ; 353 ; 453) si les substances étrangères sur le film protecteur (210 ; 310 ; 410) ont été éliminées ou non.

5. Dispositif (200 ; 300 ; 400) selon la revendication 4,
dans lequel le capteur comprend en outre une partie de détection d'intensité lumineuse configurée pour mesurer une intensité lumineuse de la lumière transmise à travers le film protecteur (210 ; 310 ; 410), et
le dispositif est configuré de telle sorte que des opérations du rouleau d'enroulement (260 ; 360 ; 460) et du rouleau d'alimentation sont arrêtées lorsque l'intensité lumineuse mesurée par la partie de détection d'intensité lumineuse est inférieure à une valeur prédéterminée.

6. Dispositif (200 ; 300 ; 400) selon la revendication 1, configuré de telle sorte que, lorsque le capteur confirme que les substances étrangères n'ont pas été éliminées, le film protecteur (210 ; 310 ; 410) est déplacé vers le rouleau d'enroulement (260 ; 360 ; 460) lorsque que le rouleau d'enroulement (260 ; 360 ; 460) tourne, et le film protecteur (210 ; 310 ; 410) enroulé sur le rouleau d'enroulement (260 ; 360 ; 460) est ensuite déroulé et déplacé vers le rouleau d'alimentation (221 ; 321 ; 421) lorsque le rouleau d'alimentation (221 ; 321 ; 421) tourne dans une direction inverse.

7. Dispositif (200 ; 300 ; 400) selon la revendication 1, configuré de telle sorte que le nano film mince est formé de sorte que des particules ayant une taille de particule de 1 µm ou moins sont adsorbées.

8. Dispositif (200 ; 300 ; 400) selon la revendication 1, dans lequel le rouleau de nettoyage (340) comprend un premier rouleau de nettoyage (341) et un second rouleau de nettoyage (342) ;
le dispositif étant configuré de telle sorte que des nano films minces du premier rouleau de nettoyage (341) et du second rouleau de nettoyage (342) sont formés pour adsorber des particules étrangères ayant des tailles différentes, et le premier rouleau de nettoyage (341) est formé pour adsorber des particules étrangères plus grosses que celles adsorbées par le second rouleau de nettoyage (342) ; et
le premier rouleau de nettoyage (341) et le second rouleau de nettoyage (342) sont disposés en séquence sur la base d'une direction de déplacement du film protecteur (210 ; 310 ; 410) se déplaçant du rouleau d'alimentation (221 ; 321 ; 421) jusqu'au rouleau d'enroulement (260 ; 360 ; 460).

9. Dispositif (200 ; 300 ; 400) selon la revendication 8, configuré de telle sorte que le nano film mince formé sur le premier rouleau de nettoyage (341) est formé de sorte que des particules ayant une taille de 1 µm à 2 µm sont adsorbées, et le nano film mince formé sur le second rouleau de nettoyage (342) est formé de sorte que des particules ayant une taille inférieure à 0,5 µm sont adsorbées.

10. Dispositif (200 ; 300 ; 400) selon la revendication 1, dans lequel le rouleau de nettoyage (440) comprend une paire de rouleaux, et les rouleaux sont formés en ligne droite dans une direction verticale avec le film protecteur (410) interposé entre eux, de telle sorte que les substances étrangères restant sur les deux côtés du film protecteur (410) sont éliminées pendant que le film protecteur (410) passe entre la paire de rouleaux.
